# EUROPEAN PATENT SPECIFICATION

(11) **EP 1 343 383 B1**
(45) Date of publication and mention of the grant of the patent: **25.08.2010**
(21) Application number: 01985444.7
(22) Date of filing: 21.12.2001
(51) Int. Cl.: A23C 9/20, A23K 1/16, A23L 1/29, A23K 1/18, A23L 1/314

(54) **METHOD TO ALTER THE ISOMERIC PROFILE OF TRANS FATTY ACIDS IN RUMINANT MEAT AND MILK AND TO INCREASE THE CONCENTRATION OF $I(CIS)-9, $I(TRANS)-11 CONJUGATED LINOLEIC ACID**
VERFAHREN ZUR ÄNDERUNG DES ISOMEREN TRANS-FETTSÄUREPROFILS IN WIEDERKÄÜERFLEISCH UND MILCH UND ERHÖHUNG DER KONZENTRATION DER CIS-9, TRANS-11 KONJUGIERTEN LINOLEINSÄURE
PROCEDE DE MODIFICATION DU PROFILE ISOMERIQUE D'ACIDES GRAS TRANS DANS LA VIANDE ET LE LAIT DE RUMINANTS ET D'AUGMENTATION DE LA CONCENTRATION D'ACIDES LINOLEIQUES CONJUGUES (CLA) I CIS /I -9, I TRANS /I -11

(30) Priority: 22.12.2000 EP 00870324
(43) Date of publication of application: 17.09.2003
(73) Proprietor: Université Catholique De Louvain, 1348 Louvain-La-Neuve (BE); Griinari, Juha Mikko, 02660 Espoo (FI)
(72) Inventor: LARONDELLE, Yvan, B-1030 Brussel (BE); FOCANT, Michel, B-1180 Uccle-Bruxelles (BE); MIGNOLET, Eric, B-4540 Amay (BE); GRIINARI, Juha, Mikko, FIN-02660 Espoo (FI)
(74) Representative: Brants, Johan P.E.
(86) International application number: PCT/EP2001/015386
(87) International publication number: WO 2002/051255

(56) References cited:
- EP-A- 0 998 853
- WO-A-99/08540
- WO-A-99/20123
- KUZDZAL-SAVOIE, S., KUZDZAL, W., AND ILTCHENKO, M.: "Increase in the level of linoleic acid in cows milk fat" RIVISTA ITALIANA DELLE SOSTANZE GRASSE., vol. 52, no. 1, 1975, pages 29-31, XP001004589 MILAN., IT ISSN: 0035-6808
- FOCANT, M., MIGNOLENT, E., MARIQUE, M., CLABOTS, F., BREYNE, T., DALEMANS, D., AND LARONDELLE, Y.: "The effect of Vitamin E supplementation of cow diets containing rapeseed and linseed on the prevention of milk fat oxidation" JOURNAL OF DAIRY SCIENCE, vol. 81, no. 4, 1998, pages 1095-1101, XP002167847
- GLÄSER, K. R., SCHEEDER, M. R. L., AND WENK, C.: "Dietary C18:1 trans fatty acids increase conjugated linoleic acid in adipose tissue of pigs" EUROPEAN JOURNAL OF LIPID SCIENCE AND TECHNOLOGY, vol. 102, November 2000 (2000-11), pages 684-686, XP002195739
- SHANTHA N C ET AL: "CONJUGATED LINOLEIC ACID CONCENTRATIONS IN PROCESSED CHEESE CONTAINING HYDROGEN DONORS, IRON AND DAIRY-BASED ADDITIVES" FOOD CHEMISTRY, ELSEVIER SCIENCE PUBLISHERS LTD, GB, vol. 47, no. 3, 1993, pages 257-261, XP002035277 ISSN: 0308-8146

## Description

### FIELD OF THE INVENTION

The present invention generally relates to a method of improving the quality of milk and meat products and to the derived products thereof. In a first aspect, it relates to a method for altering the fatty acid composition in milk or tissue fat directly derived from a ruminant. More particularly, the inventors pertain to a method of increasing the *cis*-9, *trans*-11 conjugated linoleic acid C_{18:2} (CLA) content and the level *trans*-11 C_{18:1} fatty acids in said milk or tissue fat. Milk and tissue fat containing said increased levels of CLA and *trans* fatty acids are also disclosed. The present specification also describes a suitable feed for use in said method.

### BACKGROUND

Conjugated linoleic acid (CLA) refers to a collection of eighteen carbon fatty acids with conjugated double bonds in variable positions and geometric configurations. Researchers first became interested in CLA as an anticarcinogenic factor found in ruminant fat (Pariza et al. 1985). Since the initial identification by Pariza and coworkers, the list of potential health effects demonstrated in animal models has been further extended and includes today antidiabetic, antiatherogenic, antiobesity, and immune stimulating effects (Pariza 1999). Milk fat typically contains one major isomer, *cis*-9, *trans*-11 CLA and several other minor isomers (Sehat et al. 1998; Bauman et al. 2000a).

The *cis-*9, *trans*-11 isomer possesses anticarcinogenic activity and is effective when consumed as a component of foods. The anticarcinogenic effect was demonstrated in a rat model using NMU (methylnitroso-urea) as the carcinogen (Ip et al. 1999). Intake of dairy products, in particular full fat milk, has been associated with decreased risk of breast cancer (Knekt et al. 1996). In another study examining the relationship between dietary intakes of CLA from natural foods and breast cancer risk in postmenopausal women, intake of cheese was found to be correlated with lower risk of breast cancer (Aro et al. 2000). Increased serum levels of *cis-*9, *trans*-11 CLA were also predictive of lower breast cancer risk in this study. Protective effect of whole milk against breast cancer was associated in these study populations with two to three fold variation in CLA intakes estimated to be from 320 to 700 mg/d in the study by Knekt et al. (1996) and 70 to 200 mg/d in the study by (Aro et al. 2000).

If CLA will be confirmed to be an important contributing factor to the lower risk of breast cancer in human population, enhancement of the concentration of CLA in dairy products by two to three fold could have a major impact. In addition to its anticarcinogenic effect, the *cis*-9, *trans*-11 isomer of CLA may also stimulate the immune function and reduce the atherogenesis in the cardiovascular system.

*Cis*-9, *trans*-11 CLA is formed as an intermediate in the biohydrogenation of linoleic acid (*cis*-9, *cis*-12 C_{18:2}) in the rumen (Griinari & Bauman, 1999). A number of dietary situations that affect concentration of CLA in milk fat have been described (Bauman et al. 2000). Commercial products of CLA are produced by alkali isomerization of high linoleate oils and contain ideally a 1:1 mixture of two CLA isomers, *cis*-9, *trans-*11 and *trans-*10, *cis*-12 (Reaney et al. 1999). *Trans*-10 *cis*-12 CLA is present at low levels in milk fat (1 % of total CLA) and it possesses a set of physiological effects that are distinct from the effects of the *cis*-9, *trans*-11 isomer (Pariza 1999). Enhancement of *cis*-9, *trans*-11 CLA in milk fat by natural dietary means is a cost-effective strategy to enrich our diets with a potentially health-promoting component.

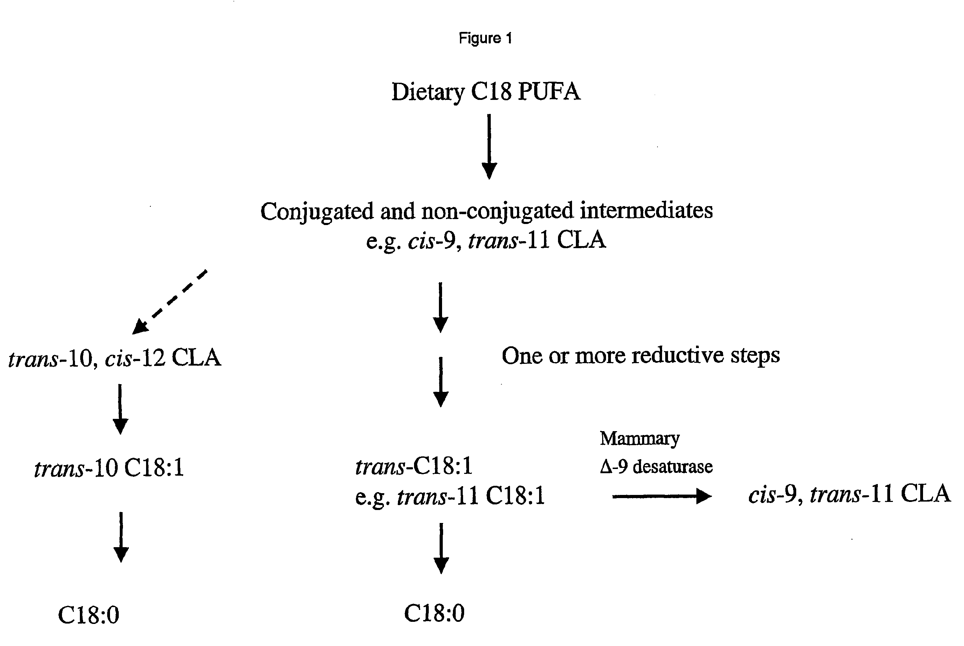

Dietary fats of ruminant animal origin, in particular dairy products, are the main source of dietary CLA (Fritsche et al. 1999). This is wholly related to the presence of the rumen and rumen micro-organisms, which biohydrogenate polyunsaturated fatty acids of the diet (Figure1). During the process of biohydrogenation some of the fatty acid intermediates escape from the rumen and become absorbed in the small intestine, and subsequently incorporated into milk fat. These intermediates include *cis*-9, *trans*-11 CLA and *trans*-11 C_{18:1}, both of which contribute to milk fat *cis-*9, *trans*-11 CLA since *trans*-11 C_{18:1} can be desaturated back to *cis-*9, *trans*-11 C_{18:2} in the mammary gland (Griinari et al. 2000). This process involves the action of delta-9 desaturase, an enzyme active in a number of different tissues in particular in the cow's mammary gland. Thus, a feeding strategy that enhances the ruminal formation of *trans-*11 C_{18:1} will equally increase milk fat output of CLA. Example 1 demonstrates the feasibility of CLA enhancing strategy, which is based on dietary supplementation with fish oil. Feeding of fish oil results in altered rumen biohydrogenation, which increases formation of vaccenic acid in the rumen. Increase in ruminal outflow of vaccenic acid alone is sufficient to enhance concentration of CLA in milk fat.

A number of reviews, patents and patent applications disclosed strategies to enhance CLA levels in milk fat (Griinari and Bauman 1999; Bauman et al. 2000b; Chilliard et al. 2000). These feeding strategies typically involve the use of vegetable oils as a source of unsaturated fatty acids.

US 5,770,247 disloses a method to increase the CLA content of milk which consists of feeding to a lactating cow a diet which contains about 1% to about 5% of vegetable oil containing linoleic or linolenic acid.

WO 99/63991 discloses a method to increase levels of *trans*-C_{18:1} fatty acids and in particular of the *trans*-11 isomer (vaccenic acid) in ruminants. These *trans* fatty acids might then be fed to other mammals and these mammals will form CLA from them. Said method involves feeding ruminants high amounts of linoleic acid, i.e. diets high in corn oil or soy oil which leads to high levels of *trans*-11 C_{18:1}, and/or lowering the pH of the rumen to allow for the accumulation of vaccenic acid, the substrate for *cis*-9, *trans*-11 CLA found in food products of production animals.

It is also known that supplementation of dairy cow diets with fish oils enhances milk fat CLA content. In this respect, WO 99/08540 discloses a dairy product having a fatty acid composition which includes at least 15 mg CLA/g of fat and preferably also includes at least about 10 mg omega-3 fatty acid/g of fat. Said dairy product is produced by a ruminant which has been fed a diet which includes a fish-derived product such as fish oil or fish meal. The diet typically includes about 0.5 % to about 5 % by dry weight of oil supplied by the fish-derived product.

WO 99/20123 relates to a method for increasing the concentration of the cis-9, trans-11 isomer of octadecadienoic acid (CLA) in the milk or tissue fat of a ruminant. WO 99/20123 further relates to a dairy product having a fatty acid composition which includes at least 15 mg CLA/g of fat. Said dairy product is produced by a ruminant which has been fed a diet including a fish-derived product such as fish oil or fish meal.

The problem underlying the present invention is that in the methods described above and used to increase the CLA content, the final output of CLA is limited due to the deleterious effect of increased formation of *trans-10* C_{18:1}. Dietary addition of vegetable or fish oils have the major disadvantage that they result in increased formation of *trans*-10 C_{18:1} on the expense of *trans*-11 C_{18:1} (Griinari et al, 1998, Griinari and Bauman, 1999). This results in decreased rates of CLA biosynthesis in the mammary gland.

Rumen bacteria are sensitive to the content of vegetable and fish oils in the diet, because unsaturated fatty acids contained in these oils have an unspecified toxic effect on the rumen bacteria. Biohydrogenation is thought to be the mechanism that aids rumen bacteria to deal with the presence of unsaturated fatty acid in their environment. However, when the load of unsaturated fatty acids in the diet exceeds biohydrogenation capacity, growth as well as function of rumen bacteria is impaired. Impairment of rumen bacterial function is consistent with decreased rates of fibre digestion in the rumen (Palmquist 1984) and decreased rate of milk fat synthesis in the mammary gland (Bauman and Griinari 2000) observed in conjunction with feeding high levels of vegetable and fish oils (a situation often referred to as milk fat depression). Change in rumen environment leading to decreased fibre digestion and reduced milk fat is associated with altered rumen biohydrogenation characterised by a shift in major biohydrogenation intermediates: decreased formation of *trans*-11 C_{18:1} and increased formation of *trans*-10 C_{18:1}in the rumen. In the remaining part of the text, the expression "*trans*-11 to *trans*-10 shift" is used to describe this process. This shift is also depicted in Figure 1. As a result of the *trans*-11 to *trans*-10 shift, ruminal output of *trans*-10 C_{18:1} is increased and consequently the output of *trans*-11 C_{18:1} is decreased. Due to the importance of *trans*-11 C_{18:1} as the precursor of milk fat CLA, milk fat CLA content decreases (Bauman et al. 2000a). As demonstrated by the work of Bauman et al. (2000a), CLA content in milk fat can be increased up to ten fold, but it appears that this effect is transient due to the *trans* -11 to *trans*-10 shift in the rumen. In another example, cows fed with a diet that maximally increases milk fat content show a decrease in milk CLA content after the 8^{th} milking. This decrease is produced by the *trans*-11 to *trans*-10 shift and it is associated with reduced milk fat.

Therefore, it would be advantageous to have a method to prevent this *trans*-11 to *trans*-10 shift in the rumen and to maintain *trans*-11 C_{18:1} levels and subsequently the CLA-levels in milk fat. The present invention provides a method wherein the above stated problems are at least partially overcome by using a chemical compound selected from the vitamin E family, or a structurally related compound or derivative thereof, or another chemical compound with similar properties, particularly as defined in the claims.

The method presented in this application will further enhance feeding strategies described in patent by US 5,770,247, WO 99/08540 and WO 99/63991 to obtain higher levels of CLA enrichment in milk fat. The invention presents a complementary method. However, the method of the present invention can be used alone as such, or in combination and/or in any other feeding situations than those described in the prior art.

It is an objective of the present invention to provide a method to support the maintenance of high levels of CLA in milk or tissue fat directly derived from a ruminant.

In particular, it is an objective of the present invention to provide a method which allows to obtain high rates of *trans*-11 C_{18:1} formation in the rumen. As a result, said method allows to increase the amounts of *trans*-11 C_{18:1} available to the mammary gland or other tissues and increases levels of CLA in milk fat or tissue fat of said animal.

It is another objective of the present invention to increase *trans*-11 C_{18:1} formation in the rumen when animals are fed diets that otherwise would result in formation of large amounts of *trans-10* C_{18:1}, for instance diets with high unsaturated fatty acid content and/or low effective fibre content and/or high starch content.

It is yet another objective to alter milk fat and tissue fat composition favourably by increasing the proportion of *trans*-11 C_{18:1} and *cis*-9, *trans*-11 CLA.

Another objective described in this specification is to improve fibre digestion in the rumen and increase energy available to the ruminant animal.

Another objective described in this specification is to improve milk production or growth when energy intake is limiting or to decrease feed consumption when energy intake is not limiting.

This invention can be applied to all domestic ruminants including bovine, ovine and caprine species plus others.

This invention can be applied on lactating as well as growing animals to alter fatty acid composition in milk and tissue lipids.

### DETAILED DESCRIPTION OF THE INVENTION

The present specification generally relates to a method of treating a ruminant. It relates to methods of improving the quality of milk and meat products produced by said ruminants, in particular by increasing the content of *trans*-11 C_{18:1} fatty acid and CLA of said products. In particular, the present invention provides:
(i) Method for increasing the content of *trans*-11 C_{18:1} fatty acid and conjugated linoleic acid (CLA) in milk or tissue fat directly derived from a ruminant, comprising the step of administering to said ruminant a suitable amount of a chemical compound selected from the group consisting of the vitamin E family, comprising α-tocopherol, β-tocopherol, γ-tocopherol, δ-tocopherol, tocotrienols or a structurally or functionally related compound such as derivatives of tocopherols such as chroman analogs and trolox, synthetic phenol compounds, such as di-*tert*-butylhydroxy toluene (BHT), *tert*-butylhydroxy anisole (BHA), natural phenol compounds such as flavonoids, secondary antioxidants that support vitamin-E effect such as ascorbic acid or ubiquinol or derivatives or mixtures thereof, wherein said suitable amount results in administering more than 3 IU, preferably more than 6 IU vitamin E/kg body weight/day.
(ii) A method as set forth in (i) above wherein said chemical compound is a member of the vitamin E family, more preferably all-rac-α-tocopheryl acetate.
(iii) A method as set forth in (i) or (ii) above wherein said suitable amount results in administering about 15 to about 20 IU vitamin E/kg body weight/day.
(iv) A method as set forth in any of (i) to (iii) above wherein said chemical compound of the vitamin E family or structurally or functionally related compound or derivative thereof is administered in conjunction with a diet increasing the conjugated linoleic acid content in milk or tissue fat.
(v) A method as set forth in any of (i) to (iv) above wherein said ruminant is a lactating ruminant.
(vi) A method as set forth in (v) above wherein said lactating ruminant is a cow.
(vii) A method as set forth in any of (i)-(vi) above for increasing the content of CLA in milk or tissue fat directly derived from a ruminant.
(viii) A method as set forth in any of (i)-(vii) above for increasing the content of *trans*-11 C_{18:1} fatty acid in milk or tissue fat directly derived from a ruminant.
(ix) A method as set forth in any of (i)-(viii) above for increasing the content of both *trans-*11 C_{18:1} fatty acid and CLA, without simultaneously increasing the content of *trans* 10 C_{18:1} fatty acid in milk or tissue fat directly derived from a ruminant.
(x) A method as set forth in any of (i)-(ix) above for reducing the formation of *trans*-10 C_{18:1} fatty acid in the rumen.
(xi) Raw milk or tissue fat obtainable by the method as set forth in any of (i)-(x) above, having a fatty acid composition comprising at least 1 % of the total fatty acids in the form of *cis*-9, *trans*-11 C_{18:2}.
(xii) Raw milk or tissue fat as set forth in (xi) above having a fatty acid composition characterized by a *trans*-11 C_{18:1}/*trans*-10 C_{18:1} ratio higher than 2.
(xiii) A nutritional product comprising the milk or tissue fat obtainable by the method as set forth in any of (i)-(x) above, having a fatty acid composition comprising at least 1 % of the total fatty acids in the form of *cis*-9, *trans*-11 C_{18:2} and having a *trans*-11 C_{18:1}/*trans*-10 C_{18:1} ratio higher than 2.

The present specification further describes a method for increasing the content of *trans*-11 C_{18:1} fatty acid and CLA in milk or tissue fat directly derived from a ruminant, comprising the step of administering to said ruminant a suitable amount of a chemical compound selected from the group consisting of the vitamin E family, comprising α-tocopherol, β-tocopherol, χ-tocopherol, δ-tocopherol, tocotrienols or a structurally or functionally related compound such as derivatives of tocopherols such as chroman analogs and trolox, synthetic phenol compounds, such as di-*tert*-butylhydroxy toluene (BHT), *tert*-butylhydroxy anisole (BHA), natural phenol compounds such as flavonoids, secondary antioxidants that support vitamin-E effect such as ascorbic acid or ubiquinol or derivatives or mixtures thereof.

For purposes of definition throughout this description, it is understood herein that a fatty acid is an aliphatic (saturated or unsaturated) monocarboxylic acid. Lipids are understood to be fats or oils including the glyceride esters of fatty acids along with associated phosphatides, sterols and related compounds. A commonly employed shorthand system is used in this specification to denote the structure of the fatty acids. This system uses the letter "C" accompanied by a number denoting the number of carbons in the hydrocarbon chain, followed by a colon and a number indicating the number of double bonds, e.g. C20:5 eicosapentaenoic acid.

Also used in the description is "CLA" or "conjugated linoleic acid" which means a fatty acid that is an octadecadienoic acid having a conjugated double bond structure at any of several possible positions on the 18 carbon chain (7,9 to 12,14). The double bond at each of these positions can be in either the cis or trans configuration. The term CLA as used herein refers to a fatty acid composition made up of one or more of the "conjugated linoleic acid" isomers.

The term "fatty acid composition" means the identifiable fatty acid residues in the various triacylglycerols in the fat of said composition. In this description, the amount of an individual fatty acid is stated as mg of the fatty acid per gram of total fatty acids.

According to a first embodiment of the invention, a method for increasing the content of *trans*-11 C_{18:1} fatty acid and CLA in milk or tissue fat directly derived from a ruminant includes administering to said ruminant a suitable amount of a chemical compound selected from the vitamin E family. Compounds of the vitamin-E family include, alpha-, beta-, gamma-, delta- tocopherols and -tocotrienols plus all their similar acting derivatives.

According to a further embodiment, active compounds might include not only the members of the vitamin E family but also a group of structurally or functionally (secondary antioxidants that potentiate vitamin-E effect, other free radical scavengers) related compounds or derivatives thereof.

Non limiting examples of structurally/functionally related compounds are given hereunder.
1. Derivatives of tocopherols (such as chroman analogs and trolox),
2. Synthetic phenol compounds [such as di-*tert*-butylhydroxy toluene (BHT), *tert-*butylhydroxy anisole (BHA)],
3. Natural phenol compounds (such as flavonoids),
4. Secondary antioxidants, such as compounds active in the aqueous phase such as ascorbic acid or compounds active in the lipid phase such as ubiquinol, and derivatives thereof.

Said compounds can be mixed with other feed, or can be used alone as a separate supplement. The amount of compound to be administered depends on the particular compound used.

The present specification also describes a feed or a diet for ruminants resulting in increasing the content of *trans*-11 C_{18:1} fatty acid and CLA in milk or tissue fat directly derived there from. A suitable diet comprises administering more than 3 IU, preferably more than 6 IU vitamin E/kg body weight/day, yet more preferably about 15 to about 20 IU vitamin E/kg body weight/day.

An animal feed able to alter the *trans*-11 C_{18:1} fatty acid and CLA content in milk or tissue fat directly derived from a ruminant, comprising a suitable amount of a chemical compound selected from the group consisting of the vitamin E family, comprising α-tocopherol, β-tocopherol, χ-tocopherol, δ-tocopherol, tocotrienols or a structurally or functionally related compound such as derivatives of tocopherols such as chroman analogs and trolox, synthetic phenol compounds, such as di-*tert*-butylhydroxy toluene (BHT), *tert*-butylhydroxy anisole (BHA), natural phenol compounds such as flavonoids, secondary antioxidants that support vitamin-E effect such as ascorbic acid or ubiquinol or derivatives or mixtures thereof.

In an example a feed comprises vitamin E in an amount of more than 1500, preferably more than 3000 IU, yet more preferably more than 4000, more than 5000 or more than 6000 vitamin E/day.

This invention can be applied to all domestic ruminants including bovine, ovine and caprine species plus others, for example a cow, goat, sheep, buffalo, deer etc. This invention can be applied on lactating as well as growing animals to increase content of *trans*-11 C_{18:1} fatty acid and CLA in milk or tissue fat.

Milk and other animal products are essential food sources for a majority of the population. For instance, a problem in milk fat is the high level of medium chain saturated fatty acids (lauric (C_{12:0}), myristic (C_{14:0}) and palmitic acid (C_{16:0})) which have been associated with increased risk of cardiovascular disease. On the other hand, milk fat is relatively low in oleic acid (C_{18:1} *cis*) as well as in polyunsaturated fatty acids. The newest focus of interest is the conjugated linoleic acid, that is CLA, contained in milk and tissue fat, which has been shown to decrease the risk of cancer in many animal and in vitro tests. Also, vaccenic acid (*trans*-11 C_{18:1}) contained in milk fat is a desired component, because it has been shown to convert to CLA in humans under the effect of the delta-9-desaturase enzyme (Adlof et al., 2000).

Thus, it is desirable to produce milk and meat products with improved nutritional characteristics. The present invention accomplishes these goals by increasing the proportion of both *trans*-11 C_{18:1} and *cis*-9, *trans*-11 CLA in milk or tissue fat. This increase of CLA content gives the milk and meat product anti-carcinogenic activity and potentially other positive health benefits including enhancement of immune function and reduction in atherogenesis, as discussed in the background section. Enhancement of concentration of vaccenic acid in milk and meat possibly adds to the health benefits of dietary CLA given that vaccenic acid can be converted to *cis*-9, *trans*-11 CLA in human tissues. The inventors surprisingly found that addition of vitamin E to feed of cows at higher levels than routinely added, and specifically at levels as defined in the claims, will minimise the formation of *trans*-10 C_{18:1} and support higher rates of *trans*-11 C_{18:1} formation in the rumen (example 2). In turn, higher rates of CLA synthesis are obtained in the mammary gland or other tissues, resulting in higher levels of CLA in milk or tissue fat.

Thus, a suitable amount of a member of the vitamin E family, or a structurally or functionally related compound or derivative thereof as claimed in the first embodiment, will influence biohydrogenation and allow the production of milk or tissue fat with a highly desirable fatty acid profile in terms of *trans* and conjugated fatty acids: high *trans*-11 C_{18:1}, high cis-9, *trans*-11 C_{18:2} and low *trans*-10 C_{18:1}. Furthermore, said member of the vitamin E family or related compound will avoid the shift from *trans*-11 to *trans*-10 biohydrogenation, which classically occurs when for instance cows are fed diets with high doses of vegetable oils or fish oils, or with products containing these oils.

It is described that a parson skilled in the art could replace vitamin E (all-rac-α-tocopheryl acetate) by any other structurally or functionally related compound, which is able to produce the same reaction as claimed in the first embodiment.

Thus, in an embodiment of this invention, said chemical compound is a member of the vitamin E family. According to another more preferred embodiment, said member of the vitamin E family is α-tocopherol in its esterified form (all-rac-α-tocopheryl acetate).

Vitamin E is administered in an amount of more than 3 preferably more than 6IU/kg body weight/day. According to the invention, 1 International Unit (IU) of vitamin E corresponds to 1 mg of α-tocopheryl acetate.

Assuming a body weight of 500 kg for a cow, said amount of vitamin E as defined above corresponds to more than 1500 and preferably more than 3000 IU vitamin E/day.

According to yet another more preferred embodiment, said suitable amount results in administering about 15 to about 20 IU vitamin E/kg body weight/day.

Again, assuming a body weight of 500 kg for a cow, said amount of vitamin E as defined above corresponds to about 7500 IU to about 10 000 IU vitamin E/day.

A comparable amount (IU/day) for other ruminants can easily be established. The daily dose for other ruminants can be determined experimentally, i.e. IU/kg of body weight/d can be used to provide the first estimate. The experimental protocol can be described as follows:
- feed the animal a high concentrate low forage diet (diet consisting of 60 to 80% concentrate and 20 to 40% forage)
- add 5% sunflower oil to the diet (other oils high in linoleic acid such as corn oil, safflower oil can also be used)
- add 3 levels of vitamin-E starting from 3 up to 6 IU/kg body weigth/day
- continue feeding for 2 weeks and take milk samples after the first and second weeks
- analyse milk samples for fatty acid composition
- recommended dose is the level that produces the highest *trans*-11 to *trans*-10 C18:1 ratio.

Vitamin E is widely used in dairy cows feeding to supplement low concentrations of vitamin E in the basal feeds. Feed with low vitamin E content are known from European patent 0429879B1. Current recommendation for use of vitamin E to prevent deficiency is to add enough vitamin E to reach a level of 15 IU/kg feed (INRA 1988). Typically this means an addition of 300 IU/d/cow. In addition to the basal dietary supplementation, vitamin E is added to lactating dairy cow diets to improve mammary gland health. Both scientists and manufacturers of vitamin E recommend the use of 1500 IU/d/cow (Smith et al. 2000; BASF AG. Technical Specification TS 9503). However, none of these publications discloses the addition of a high amount of vitamin E comprising at least more than 3000 IU vitamin E/day) to the feeds. Also, in none of these publications the addition of vitamin E aims to increase the content of *trans*-11 C_{18:1} and CLA in milk fat of cows.

As described further below, the inventors tested a dose of about 9600 IU vitamin E /day in cows. This amount was found to increase the content of *trans*-11 C_{18:1} and CLA in milk fat of said cows. However the effective dose might be lower but above the basal level of 1500 or preferably 3000 IU vitamin E /day.

Vitamin E has a toxic effect only at very high dosages. In growing chicks, daily intake of 1000 IU/kg of body weight is without negative effects. Corresponding dietary dose in a 500 kg lactating dairy cow would be 500 000 IU/d which far exceeds the effective dose range in this invention as described before.

The use of vitamin E as a feed supplement for altering the fatty acid composition of milk of cows is illustrated in example 2. In this experiment, 3 groups of cows were fed either a control diet, a diet supplemented with oilseed, and a diet supplemented with oilseed + 9616 IU/d vitamin E. In terms of trans fatty acids, the values obtained in the milk clearly indicate that the oilseed diet induces a shift in the ruminal biohydrogenation process, resulting in formation of a proportionally higher amount of *trans*-10 C_{18:1} than of *trans*-11 C_{18:1}. This shift in major biohydrogenation intermediates was completely abolished by the supplementation of the oilseed diet with vitamin E. This vitamin E effect allows the rumen to produce more *trans-*11 C_{18:1}, which explains the increased content of *trans*-11 C_{18:1} and CLA in milk fat.

Vitamin-E is thought to support the growth and function of bacteria that produce *trans-*11 C_{18:1} as an intermediate, probably in two complementary ways: by acting in place of α-tocopherylquinol in the electron transfer chain which provides electrons for the reduction of *cis*-9, *trans*-11 C_{18:2} to *trans*-11 C_{18:1} and/or by inhibiting the growth and function of bacteria that produce *trans-10* C_{18:1} as an intermediate i.e. the competing pathway. The competing may pathway produce *trans*-10, *cis*-12 C_{18:2} and subsequently *trans*-10 C_{18:1} in a process activated by free radical exchanges. Thus, vitamin-E may inhibit this process by scavenging the free radicals.

Bacteria that produce *trans*-11 C_{18:1} include many species of the fibre-digesting bacteria e.g. *Butyrivibrio fibrisolvens*. Thus, supporting the growth of the fibre-digesting bacteria may improve fibre digestion in the rumen and subsequently enhance the energy supply to the animal.

According to yet another embodiment, said chemical compound selected from the vitamin E family or structurally or functionally related compound or derivative thereof as defined above, is fed in admixture with a diet increasing the CLA content in milk or tissue fat.

More particularly, it can be fed in conjunction with diets intending to enhance ruminal formation of *trans*-11 C_{18:1}, and subsequently CLA content in milk fat. The composition of such diets is described in published reviews (Griinari and Bauman 1999; Bauman et al. 2000; Chilliard et al. 2000). For instance, it is known that vegetable oils or fish oils added to lactating dairy cow diets enhance the proportion of unsaturated fatty acids in milk fat, enhance the formation of *trans*-11 C_{18:1} in the rumen and subsequently the formation of CLA in the mammary gland. However, dietary addition of these oils result in increased formation of *trans-*10 C_{18:1} on the expense of *trans*-11 C_{18:1} (Griinari et al, 1998, Griinari and Bauman, 1999). This results in decreased rates of CLA biosynthesis in the mammary gland. The inventors found that vitamin E avoids this shift from *trans*-11 to *trans*-10 biohydrogenation, and allows to maintain high levels of *trans*-11 C_{18:1} in the rumen.

According to yet another embodiment, the ruminant in the method of the invention is a lactating ruminant.

According to a yet another more preferred embodiment, said lactating animal is a cow.

According to another embodiment, the present invention relates to a method as described above for increasing the CLA content in milk or tissue fat directly derived from a ruminant.

As mentioned before, there is interest in increasing milk or tissue fat content of CLA because it is one of the most potent, naturally occurring anti-carcinogens. Of the limited number of naturally occurring substances that have been demonstrated to have anti-carcinogenic activity in experimental models, all are of plant origin except for CLA. Indeed, *cis*-9, *trans*-11 C_{18:2} is a unique anti-carcinogenic agent because it is mainly present in foods from animal sources.

Experimental animal models have provided evidence that CLA can help to decrease the incidence of cancer and suggest that CLA intake during mammary gland development may provide lasting protection against subsequent tumorigenesis (Ip et al., 1994). CLA have also other positive biological effects including enhanced immune function and reduction of atherogenesis.

According to yet another embodiment, the present invention relates to a method as described above for increasing the *trans-fatty* acid 11 C_{18:1} content in milk or tissue fat directly derived from a milk producing ruminant.

Increasing the *trans*-fatty acid 11 C_{18:1} content in milk or tissue fat is desirable since vaccenic acid can be converted to CLA in human tissues (Adlof et al., 2000; Turpeinen et al., 2001). Vaccenic acid fed to animals also resulted in formation and tissue accumulation of *cis-9, trans-11* CLA and CLA-metabolites which are thought to be the biologically active derivatives of dietary CLA (S. Banni, unpublished data).

According to yet another embodiment, the present invention relates to a method as described above for decreasing the *trans*-fatty acid 10 C_{18:1} content in milk or tissue fat directly derived from a ruminant.

Decreasing the *trans*-fatty acid 10 C_{18:1} content in milk or tissue fat is desirable since dietary intake of *trans*-10 C_{18:1}, determined as a concentration of this trans fatty acid isomer in platelet lipids, was positively associated with the degree of coronary artery disease (Hodgson et al., 1996).

According to yet another embodiment, the present invention relates to a method as described above for increasing the content of both *trans* 11 C_{18:1} fatty acid and CLA, without simultaneously increasing the *trans* 10 C_{18:1} fatty acid content in milk or tissue fat directly derived from a milk producing ruminant.

According to yet another embodiment, the present invention relates to a method as described above for preventing the *trans-fatty* acid 10 C_{18:1} formation in the rumen of a ruminant.

Formation of *trans*-10 C_{18:1} in the rumen of cows has been described in the literature (Griinari et al. 1998; Griinari & Bauman 1999). Increased formation of *trans-10* C_{18:1} is known to be associated with decreased formation of *trans*-11 C_{18:1} in the rumen and with lower concentrations of CLA in milk fat (Griinari et al. 1999).

Before the discovery of the vitamin E effect according to this invention, the only method known in the art to prevent *trans*-10 C_{18:1} formation in the rumen was to add buffering agents to the diet (Piperova et al. 2000; WO 99/63991). Unfortunately, dietary buffers will also decrease overall production of *trans*-C_{18:1} fatty acids in the rumen and therefore this dietary strategy will not increase *trans*-11 C_{18:1} supply to the mammary gland and biosynthesis of CLA.

The present specification also describes the raw milk or tissue fat obtained by the method of the invention as described above. In particular, the invention provides the raw milk on tissue fat as defined in any one of claims 11 and 12.

As used in this invention, the terms raw milk and tissue fat refer to isolated milk or tissue fat in the form directly derived from a ruminant.

The method according to this invention allows to produce raw milk and tissue fat with a desirable fatty acid profile: high levels of high *trans*-11 C_{18:1} and cis-9, *trans*-11 C_{18:2} and low levels of *trans*-10 C_{18:1}.

The raw milk or tissue fat of the invention as described above has a fatty acid composition comprising at least 1 % of the total fatty acids in the form of *cis*-9, *trans*-11 C_{18:2}.

According to yet another embodiment, the raw milk or tissue fat of the invention as described above has a fatty acid composition comprising at least 2 % of the total fatty acids in the form of *trans*-11 C_{18:1}.

According to yet another embodiment, the raw milk or tissue fat of the invention as described above has a fatty acid composition characterized by a *trans*-11 C_{18:1}/ *trans-10* C_{18:1} ratio higher than 2.

As illustrated in example 2, by feeding cows a diet containing oilseed + 9616 IU/d vitamin E, the obtained milk composition consisted of 9 mg *trans*-10 C_{18:1}/g of total fatty acids, 34 mg *trans*-11 C_{18:1}/g of total fatty acids of and 14 mg *cis*-9,*trans*-11 CLA /g of total fatty acids. For purposes of comparison, feeding a diet without supplementation of vitamin E resulted in a milk fat composition of 27 mg *trans*-10 C_{18:1}/g of total fatty acids, 25 mg *trans*-11 C_{18:1}/g of total fatty acids and 10 mg *cis-9*,*trans*-11 CLA /g of total fatty acids. It is clear that the above claimed levels can be achieved by the method according to the invention.

The raw milk and tissue fat of the invention can be used directly or as an additive to enhance the content of CLA and other beneficial unsaturated fatty acids of foods for human intake or for animal feed. The complex lipids containing CLA and other beneficial unsaturated fatty acids can also be extracted from the milk or tissue fat with solvents, and utilized in a more concentrated form (e.g. encapsulated) for pharmaceutical purposes and industrial application.

The raw milk and tissue fat of the invention can be used for preparation of food for preventing cancer and atherogenesis and to stimulate immune function. Food products containing a beneficial profile of CLA and other beneficial unsaturated fatty acids can be administered to humans or animals for the prevention of various diseases. It is here assumed that the intake of CLA can be effective for the prevention of various types of cancer, for reduction of coronary heart disease and for enhancement of immune function.

The present specification also describes a nutritional product comprising raw milk or tissue fat of the invention as described above, or a derivative thereof. In particular, the invention provides a nutritional product as defined in claim 12.

Said nutritional product means any food product comprising the milk or tissue fat of the invention in raw or processed form. For instance, said nutritional products can be a dairy product including the milk of the invention in raw or processed form. Examples of such dairy products are natural and processed cheeses, yoghurt, butter, ice cream, butter milk, cultured butter milk, cottage cheese, sour cream, frozen yoghurt, anhydrous butter oil, anhydrous butter fat, powdered milk, condensed milk, evaporated milk and other milk-based products. Also included in the invention aremeat products comprising the fat of the invention in raw or processed form.

The present specification also describes an animal feed supplement suitable for use in the method according to the invention.

Said animal feed supplement can be mixed with a commercial feed or to a ration prepared on farm.

Said supplement comprises a chemical product selected from the vitamin E family or from a group of structurally or functionally related compounds or derivatives thereof. Examples of said products selected from the vitamin E family or structurally or functionally related compounds or derivatives thereof are listed above in the description of this patent specification.

The present specification also describes an animal feed supplement comprising a suitable amount of vitamin E **characterized in that** it results in an intake by a ruminant of more than 3 and preferably more than 6 IU vitamin E/kg body weight /day.

Assuming a body weight of 500 kg for a cow, said amount of vitamin E as defined above corresponds to more than 1500 and preferably more than 3000 IU vitamin E/day.

The present specification also describes an animal feed supplement comprising a suitable amount of vitamin E such that it results in an intake by a ruminant of about 15 to about 20 IU vitamin E/kg body weight /day.

Again, assuming a body weight of 500 kg for a cow, said amount of vitamin E as defined above corresponds to about 7500 IU to about 10 000 IU vitamin E/day. As mentioned before, the inventors investigated a dose of about 9600 IU vitamin E /day effective in increasing the CLA levels. However the effective dose might be lower but above the basal level of 1500 IU/day. A preferred dose of 3000 IU vitamin E/day will prevent substantial reduction in milk fat and consequently it prevents *trans*-11 to *trans-10* shift.

The present specification also describes an animal feed supplement in admixture with a diet increasing the CLA content in milk or tissue fat directly derived from a ruminant. More particularly, said feed supplement can be fed in conjunction with diets that enhance formation of *trans*-11 C_{18:1}, and subsequently CLA content in fat. The composition of such diets are described in published reviews (Griinari and Bauman 1999; Bauman et al. 2000; Chilliard et al. 2000). It is known that vegetable oils or fish oils can be used for said purpose. For example, basal diets consisting of corn grain and/or corn silage supplemented with vegetable or fish oil or products/meals containing these oils can increase CLA content in milk fat. Also, basal diets having insufficient roughage content, i.e. a level of coarse fibre feed in the diet that does not provide for maintenance of rumen environment, can increase CLA content in milk fat. In addition, also diets supplemented with fish oil at levels above 200 g/d for a lactating dairy cow can be used for said purpose. In conjunction of these said diets vitamin E supplementation may be of benefit.

The present specification also describes an animal feed.

The present specification also describes animal feed comprising a suitable amount of a chemical compound selected from the group consisting of the vitamin E family. Suitable components are chosen from the list:
1. Derivatives of tocopherols (such as chroman analogs and trolox),
2. Synthetic phenol compounds [such as di-*tert*-butylhydroxy toluene (BHT), *tert-*butylhydroxy anisole (BHA)],
3. Natural phenol compounds (such as flavonoids),
4. Secondary antioxidants, such as compounds active in the aqueous phase such as ascorbic acid or compounds active in the lipid phase such as ubiquinol, and derivatives thereof.

Suitable members thereof are vitamin E or compounds of the vitamin E family, comprising α-tocopherol, β-tocopherol, χ-tocopherol, δ-tocopherol, tocotrienols or a structurally or functionally related compound such as derivatives of tocopherols such as chroman analogs and trolox, synthetic phenol compounds, such as di-*tert*-butylhydroxy toluene (BHT), *tert*-butylhydroxy anisole (BHA), natural phenol compounds such as flavonoids, secondary antioxidants that support vitamin-E effect such as ascorbic acid or ubiquinol or derivatives or mixtures thereof.

More particularly, said animal feed can alter the *trans*-11 C_{18:1} fatty acid and CLA content in milk or tissue fat directly derived from a ruminant.

The animal feed described herein may comprise an amount of vitamin E of more than 1500, preferably 3000 IU vitamin E/day, with the aim to shift the reaction in the produced milk favouring *trans*-11 C_{18:1} production.

In an example said animal feed may comprise vitamin E in an amount of more than 3000 IU vitamin E/day, more than 4500 IU vitamin E/day, more than, 6000 IU vitamin E/day or more than 7500 IU vitamin E/day.

The animal feed described herein may comprise more than 5000 IU vitamin E/day.

Several documents are cited throughout this text. However there is no admission that any document cited is indeed prior art of the present invention.

The present invention will be described in the enclosed non-limiting examples in reference to the following Figures.

## Claims

1. Method for increasing the content of *trans*-11 C_{18:1} fatty acid and conjugated linoleic acid (CLA) in milk or tissue fat directly derived from a ruminant, comprising the step of administering to said ruminant a suitable amount of a chemical compound selected from the group consisting of the vitamin E family, comprising α-tocopherol, β-tocopherol, γ-tocopherol, δ-tocopherol, tocotrienols or a structurally or functionally related compound such as derivatives of tocopherols such as chroman analogs and trolox, synthetic phenol compounds, such as di-*tert*-butylhydroxy toluene (BHT), *tert-*butylhydroxy anisole (BHA), natural phenol compounds such as flavonoids, secondary antioxidants that support vitamin-E effect such as ascorbic acid or ubiquinol or derivatives or mixtures thereof, wherein said suitable amount results in administering more than 3 IU, preferably more than 6 IU vitamin E/kg body weight/day.

2. A method according to claim 1 wherein said chemical compound is a member of the vitamin E family, more preferably all-rac-α-tocopheryl acetate.

3. A method according to claims 1 and 2 wherein said suitable amount results in administering about 15 to about 20 IU vitamin E/kg body weight/day.

4. A method according to any of claims 1 to 3 wherein said chemical compound of the vitamin E family or structurally or functionally related compound or derivative thereof is administered in conjunction with a diet increasing the conjugated linoleic acid content in milk or tissue fat.

5. A method according to any of claims 1-4 wherein said ruminant is a lactating ruminant.

6. A method according to claim 5 wherein said lactating ruminant is a cow.

7. A method according to any of claims 1-6 for increasing the content of CLA in milk or tissue fat directly derived from a ruminant.

8. A method according to any of claims 1-7 for increasing the content of *trans*-11 C_{18:1} fatty acid in milk or tissue fat directly derived from a ruminant.

9. A method according to any of claims 1-8 for increasing the content of both *trans*-11 C_{18:1} fatty acid and CLA, without simultaneously increasing the content of *trans* 10 C_{18:1} fatty acid in milk or tissue fat directly derived from a ruminant.

10. A method according to any of claims 1-9 for reducing the formation of *trans*-10 C_{18:1} fatty acid in the rumen.

11. Raw milk or tissue fat obtainable by the method of any of claims 1-10, having a fatty acid composition comprising at least 1 % of the total fatty acids in the form of *cis*-9, *trans-*11 C_{18:2}.

12. Raw milk or tissue fat according to claim 11 having a fatty acid composition **characterized by** a *trans*-11 C_{18:1}/*trans*-10 C_{18:1} ratio higher than 2.

13. A nutritional product comprising the milk or tissue fat obtainable by the method of any of claims 1-10, having a fatty acid composition comprising at least 1 % of the total fatty acids in the form of *cis*-9, *trans*-11 C_{18:2} and having a *trans*-11 C_{18:1}/*trans*-10 C_{18:1} ratio higher than 2.

## Patentansprüche

1. Verfahren zur Erhöhung des Gehaltes von *trans*-11-C_{18:1}-Fettsäure und von konjugierter Linolsäure (CLA) in Milch oder Gewebefett, die auf direkte Weise von einem Wiederkäuer erhalten wurden, umfassend den Schritt des Verabreichens einer geeigneten Menge einer chemischen Verbindung an den Wiederkäuer, wobei die chemische Verbindung ausgewählt ist aus der Gruppe, die aus der Vitamin-E-Familie besteht, die α-Tocopherol, β-Tocopherol, γ-Tocopherol, δ-Tocopherol, Tocotrienole oder eine strukturell oder funktionell verwandte Verbindung wie beispielsweise Derivate von Tocopherolen wie etwa Chroman-Analoga und Trolox, synthetische Phenolverbindungen wie etwa Di-*tert*-butylhydroxytoluol (BHT), tert-Butylhydroxyanisol (BHA), natürliche Phenolverbindungen wie etwa Flavonoide, sekundäre Antioxidationsmittel, die die Vitamin-E-Wirkung unterstützen, wie beispielsweise Ascorbinsäure oder Ubiquinol oder Derivate oder Mischungen davon umfasst, wobei die geeignete Menge durch eine Verabreichung von mehr als 3 Internationalen Einheiten (IE), vorzugsweise von mehr als 6 IE Vitamin-E/kg Körpergewicht/Tag zugeführt wird.

2. Verfahren nach Anspruch 1, wobei die chemische Verbindung ein Mitglied der Vitamin-E-Familie, noch bevorzugter allrac-α-Tocopherylacetat, ist.

3. Verfahren nach den Ansprüchen 1 und 2, wobei die geeignete Menge durch die Verabreichung von ungefähr 15 bis ungefähr 20 IE Vitamin-E/kg Körpergewicht/Tag zugeführt wird.

4. Verfahren nach einem der Ansprüche 1 bis 3, wobei die chemische Verbindung von der Vitamin-E-Familie oder eine strukturell oder funktionell verwandte Verbindung oder ein Derivat derselben zusammen mit einer Ernährung verabreicht wird, die den Gehalt an konjugierten Linolsäuren in der Milch oder dem Gewebefett erhöht.

5. Verfahren nach einem der Ansprüche 1-4, wobei der Wiederkäuer ein laktierender Wiederkäuer ist.

6. Verfahren nach Anspruch 5, wobei der laktierende Wiederkäuer ein Rind ist.

7. Verfahren nach einem der Ansprüche 1-6 zur Steigerung des Gehaltes an CLA in Milch oder Gewebefett, die auf direkte Weise von einem Wiederkäuer erhalten werden.

8. Verfahren nach einem der Ansprüche 1-7 zur Steigerung des Gehaltes an *trans*-11-C_{18:1}-Fettsäuren in Milch oder Gewebefett, die in direkter Weise von einem Wiederkäuer erhalten werden.

9. Verfahren nach einem der Ansprüche 1-8 zur Steigerung des Gehaltes sowohl von *trans*-11-C_{18:1}-Fettsäuren als auch von CLA, ohne gleichzeitige Steigerung von dem Gehalt an *trans*-10-C_{18:1}-Fettsäuren in Milch oder Gewebefett, die auf direkte Weise von einem Wiederkäuer erhalten wurden.

10. Verfahren nach einem der Ansprüche 1-9 zur Verminderung der Bildung von trans-10-C_{18:1}-Fettsäuren im Pansen.

11. Rohmilch oder Gewebefett, die durch das Verfahren nach einem der Ansprüche 1-10 erhältlich sind, welche eine Fettsäurezusammensetzung aufweisen, in der mindestens 1 % der Gesamtfettsäuren in Form von *cis*-9, *trans*-11-C_{18:2}-Fettsäuren enthalten sind.

12. Rohmilch oder Gewebefett nach Anspruch 11, die eine Fettsäurezusammensetzung aufweisen, die durch ein Verhältnis der trans-11-C_{18:1}-/trans-10-C_{18:1}-Fettsäuren **gekennzeichnet** ist, welches größer als 2 ist.

13. Ernährungsprodukt, das die Milch oder das Gewebefett umfasst, welche durch das Verfahren nach einem der Ansprüche 1-10 erhältlich sind, wobei die eine Fettsäurezusammensetzung aufweisen, in der mindestens 1 % der Gesamtfettsäuren in Form von *cis*-9, *trans*-11-C_{18:2}-Fettsäuren enthalten sind und die ein Verhältnis der *trans*-11-C_{18:1}-/*trans*-10-C_{18:1}-Fettsäuren aufweisen, welches größer als 2 ist.

## Revendications

1. Procédé d'augmentation de la teneur en acide gras *trans-*11 C_{18:1} et en acide linoléique conjugué (ALC) dans la graisse du lait ou des tissus provenant directement d'un ruminant, qui comprend l'étape consistant à administrer au dit ruminant une quantité adaptée d'un composé chimique choisi dans le groupe constitué par la famille de la vitamine E, qui comprend l'α-tocophérol, le β-tocophérol, le γ-tocophérol, le δ-tocophérol, les tocotriénols ou un composé structuralement ou fonctionnellement apparenté tel que les dérivés des tocophérols comme les analogues du chromane et le trolox, les composés phénoliques synthétiques, tels que le di-tert-butylhydroxy toluène (BHT), le *tert*-butylhydroxy anisole (BHA), les composés phénoliques naturels tels que les flavonoïdes, les antioxydants secondaires qui supportent les effets de la vitamine E tels que l'acide ascorbique ou l'ubiquinol ou leurs dérivés ou leurs mélanges, ladite quantité adaptée résultant en l'administration de plus de 3 UI, de préférence de plus de 6 UI de vitamine E/kg de poids corporel par jour.

2. Procédé selon la revendication 1, ledit composé chimique étant un membre de la famille de la vitamine E, idéalement le tout-rac-acétate d'α-tocophéryle.

3. Procédé selon les revendications 1 et 2, ladite quantité adaptée résultant en l'administration d'environ 15 à environ 20 UI de vitamine E/kg de poids corporel/jour.

4. Procédé selon l'une quelconque des revendications 1 à 3, ledit composé chimique de la famille de la vitamine E ou ledit composé structuralement ou fonctionnellement apparenté ou dérivé de celui-ci étant administré conjointement à un régime alimentaire faisant augmenter la teneur en acide linoléique conjugué dans la graisse du lait ou des tissus.

5. Procédé selon l'une quelconque des revendications 1 à 4, ledit ruminant étant un ruminant en lactation.

6. Procédé selon la revendication 5, ledit ruminant en lactation étant une vache.

7. Procédé selon l'une quelconque des revendications 1 à 6, destiné à faire augmenter la teneur en ALC dans la graisse du lait ou des tissus provenant directement d'un ruminant.

8. Procédé selon l'une quelconque des revendications 1 à 7, destiné à faire augmenter la teneur en acide gras *trans-*11 C_{18:1} dans la graisse du lait ou des tissus provenant directement d'un ruminant.

9. Procédé selon l'une quelconque des revendications 1 à 8, destiné à faire augmenter la teneur en acide *trans* 11 C_{18:1} et la teneur en ALC, sans simultanément faire augmenter la teneur en acide gras *trans* 10 C_{18:1} dans la graisse du lait ou des tissus provenant directement d'un ruminant.

10. Procédé selon l'une quelconque des revendications 1 à 9, destiné à réduire la formation d'acide gras *trans*-10 C_{18:1} dans la panse.

11. Graisse brute du lait ou des tissus pouvant être obtenue par le procédé selon l'une quelconque des revendications 1 à 10, ayant une composition d'acides gras comprenant au moins 1% du total des acides gras sous la forme de *cis-9, trans*-11 C_{18:2}.

12. Graisse brute du lait ou des tissus selon la revendication 11, ayant une composition en acides gras **caractérisée par** un rapport *trans*-11 C_{18:1}/*trans*-10 C_{18:1} supérieur à 2.

13. Produit nutritionnel comprenant la graisse du lait ou des tissus pouvant être obtenue par le procédé selon l'une quelconque des revendications 1 à 10, ayant une composition d'acides gras comprenant au moins 1 % du total des acides gras sous la forme de *cis-9, trans*-11 C_{18:2} et ayant un rapport *trans*-11 C_{18:1}/*trans*-10 C,_{8:1} supérieur à 2.
